# EUROPEAN PATENT APPLICATION

(11) **EP 2 463 824 A1**
(43) Date of publication of application: **13.06.2012**
(21) Application number: 11192282.9
(22) Date of filing: 07.12.2011
(51) Int. Cl.: G06T 15/00, H04N 21/44, H04N 21/431, H04N 21/6377, H04N 21/442, H04N 21/234, H04N 21/658

(54) **Method and input-output device for rendering at least one of audio, video and computer graphics content and servicing device for delivering at least one of pre-rendered audio, pre-rendered video and pre-rendered computer graphics content**

(30) Priority: 13.12.2010 EP 10306399
(71) Applicant: Thomson Licensing, 92130 Issy-les-Moulineaux (FR)
(72) Inventor: Kochale, Axel, 31832 Springe (DE); Borsum, Malte, 30655 Hannover (DE); Spille, Jens, 30966 Hemmingen (DE)
(74) Representative: Streit, Arend

(57) **Abstract**

A method and an input-output device are proposed for rendering content. Further, a servicing device is proposed for delivering pre-rendered content.

For rendering, a portion of processing or memorizing resources of said input-output device (TER) is allocated such that remaining resources of said input-output device (TER) are sufficient for maintaining the input-output capability of the device (TER). Then, it is determined that an amount of resources required for rendering exceeds the allocated resources and a corresponding degree of pre-rendering is determined, too. On the serving device (SER), pre-rendering of the content according to the determined degree is performed and the pre-rendered content is delivered from the serving device (SER) to the input-output device (TER).

Since server-side rendering is limited to a required degree, bandwidth constraints can be met more easily. Furthermore, rendering occurs more distributed and can be adjusted dynamically, thus, response time can be reduced.

## Description

### TECHNICAL FIELD

The invention is made in the field of content rendering.

### BACKGROUND OF THE INVENTION

Prior to being output by output devices content needs to be rendered. For instance, image signals for a display need to be determined from a scene description and one or more templates; audio signals for loudspeakers need to be determined from a sound field or image signals for a display need to be determined from 3D computer models.

Rendering is a computational expensive task. In dependency on an output devices processing and/or memorizing capabilities rendering on the output devices therefore requires reasonable amounts of time, i.e. introduces large latencies, in particular if a predetermined rendering quality has to be achieved. The latencies introduced are even larger in case processing or memorizing resources of the output device remain partly reserved for other task, e.g. reception of user inputs in case the device is an input-output device. Sometimes, processing or memorizing resources of the output device are even incapable for achieving a predetermined rendering quality.

In particular in cases where the content is personalized and/or interactive, that is in cases where the content to-be-output depends on the user input such large latencies strongly interfere with the user's appreciation of the personalized or interactive content.

In case the personalized or interactive content is delivered from a server or a network of servers -whether it is delivered as a push service, e.g. as a broadcast signal, or it is delivered as a pull service, e.g. a video on demand (VOD) or a video download service- rendering can be outsourced to the server. This is useful in particular for input-output devices with limited processing and/or memorizing capacities such as smart phones which further are required to perform further processing task in parallel such as receiving phone calls or maintaining GPS navigation.

For instance, US Patent Application 2009/0119.729 describes a method for multicasting views of real-time streaming interactive video. In response to a user's action using an input device, a control signal is transmitted to a server. The server then takes the control signal as input for a game or application software that is running on the server and uses the control signals to process the next frame of the game or application. Once the next frame is generated, the video and audio is output from server to video compressor compressing the frame with low latency. Once the video and audio is compressed it is packetized with an address to send it back to the user's client. The client then decompresses the video and audio with low latency and displays the video on a display device.

### SUMMARY OF THE INVENTION

Even in case a low latency compression-decompression is used, outsourcing of rendering to the server still has comes along with reasonable latency. Furthermore, rendered content requires large bandwidth which can result in dropping of frames in case the peak data rate is exceeded otherwise.

Therefore, a method is proposed for rendering at least one of audio, video and computer graphics content, said content being delivered by a serving device, according to claim 1.

Said method comprises the steps of receiving, on an input-output device, a user request for the content, and allocating, in response to said user request, a portion of at least one of processing and memorizing resources of said input-output device for rendering of the requested content wherein the allocated portion is chosen such that remaining resources of said input-output device are at least sufficient for maintaining at least the input-output device's capability to receive a subsequent user request and to react thereon within a predetermined response time. Then it is determined that an amount of resources required for rendering the requested content with a predetermined quality and/or within a predetermined rendering time exceeds the allocated resources and determining a degree of pre-rendering required for meeting said predetermined rendering time and/or said predetermined rendering quality, and a pre-rendering of the content is performed on the serving device according to the determined degree of required pre-rendering. After delivering the pre-rendered content from the serving device to the input-output device, the allocated resources are used for finalizing the rendering of the content on the input-output device.

Since server-side rendering is limited to a required degree, bandwidth constraints can be met more easily and less or no content need to be dropped. Furthermore, rendering occurs more distributed and, thus, response time to user requests can be reduced. Distribution can be adjusted dynamically allowing the input-output device to maintain further processing tasks in parallel.

The features of further advantageous embodiments are specified in the dependent claims.

The invention further proposes an input-output device according to claim 6 and a servicing device according to claim 7.

### BRIEF DESCRIPTION OF THE DRAWINGS

Exemplary embodiments of the invention are illustrated in the drawings and are explained in more detail in the following description. The exemplary embodiments are explained only for elucidating the invention, but not limiting the invention's disclosure, scope or spirit defined in the claims.

In the figures:

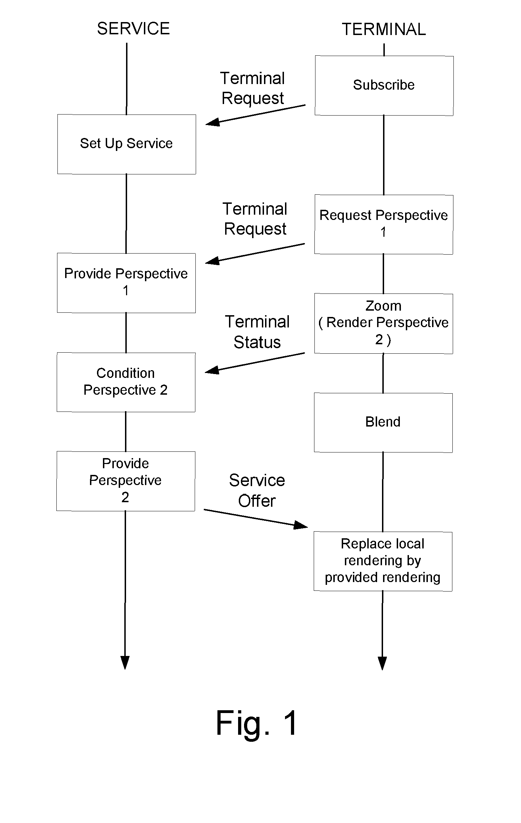

- Fig. 1: depicts an exemplary communication between an end user terminal and a servicing device;
- Fig. 2: depicts an exemplary embodiment of the servicing device and an exemplary embodiment of the end user terminal;
- Fig.3: depicts an exemplary transport stream comprising a media stream and media stream descriptions; and
- Fig. 4: depicts an exemplary RTCP Receiver Report with profile specific extensions.

### EXEMPLARY EMBODIMENTS OF THE INVENTION

The invention may be realized on any electronic device comprising a processing device correspondingly adapted. For instance, the invention may be at least partly realized in a television, a set top box, a mobile phone, on a personal computer, on a server or a server network.

For Interactive TV applications swift reaction of the service is required to guarantee customer satisfaction. With the diversification of consumer terminals supporting new user interfaces like touch gestures this becomes even more critical. Thus, means are required allowing for smooth operation on interactive content. An example (from the visual side) is the provision of a user with the option to request zooming into an overview image of a live sequence beyond the simple scaling mechanisms integrated into the main decoding and image rendering path.

While a simple picture-in-picture mechanism will just require to add parallel paths for the separate perspectives (overview and zoomed-in) it does not help much during the transition from one perspective to the next. Within the example there is the need to blend from one perspective rendering position to the next without disturbing both renderings. Additionally or alternatively, blending might by limited to an area of the display while remaining areas may continue to show other perspectives. Then parallel rendering paths are required. Thus, the available parallel processing capabilities of the terminal limit the complexity of the displayed interactive content.

To overcome the challenge that the terminal has to contain several parallel rendering engines, it is proposed to have the required processing negotiated between terminal and service provider to meet a quality of service taking into account at least one of available performance of the terminal, bandwidth of the network and cost of service.

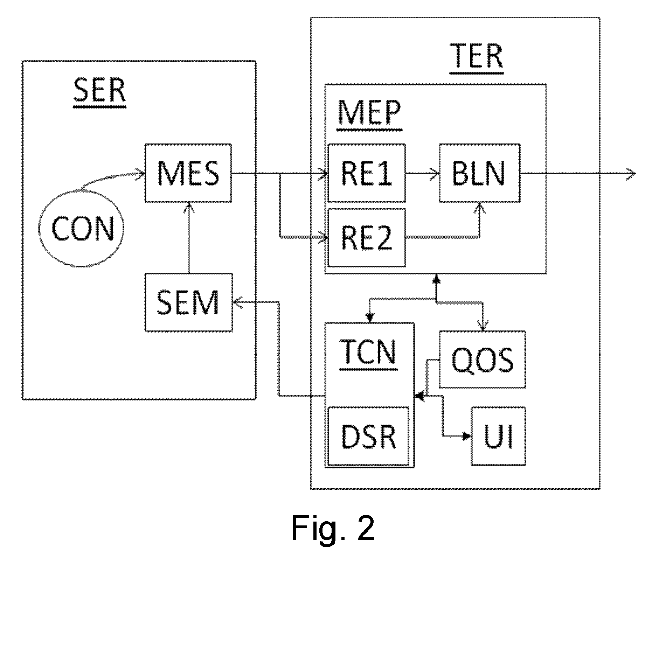

In an example depicted in Fig. 2, the service gets status updates on the rendered perspectives and/or required blending operations and provides additional sequences that reduce the terminal rendering complexity.

The terminal TER remains flexible to retain enough processing to guarantee swift reaction and hence reduces the latency or "haptical delay" when a user interacts with the terminal.

The terminal TER is connected to a service providing device SER and requests a main media sequence CON. The user selects, via a user interface UI, an area of the terminal connected display to get a special perspective that uses (optionally: also uses) the main media sequence to render a new view. The scalable media processor MEP allocates memory and processing performance to provide rendering by rendering means RE1, RE2 and finally blending by blending means BLN or mapping onto the main screen. The allocated resources are reported to the service in order to get conditioned extra sequences that eases the processing complexity down to a mere mapping or multiplexing. For instance, a QoS monitor is run on the server which checks whether the ratio of available resources is sufficient for maintaining the quality regarding response time and/or rendering quality and offers pre rendered content in case maintenance of response time or rendering quality cannot be guaranteed otherwise.

Or, the QoS monitor QOS is comprised in the terminal and checks there the ratio of available resources. Depending on a certain threshold (like 70% allocated) and/or a device status stored in a device status register DSR, a terminal controller TCN sends a request for support to a service manager SEN of the server SER which in response offers pre rendered content via media streamer MES.

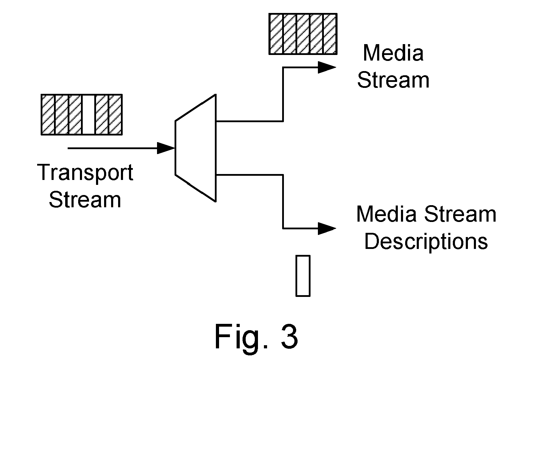

Thus, rendering complexity is distributed between the terminal and the service providing server or server network dynamically. If the service provider offers the end user a gateway device with the subscribed service the set top box could be part of said server network and, thus, processing complexity can be partly offloaded onto that gateway, also. In another embodiment or an exemplary structuring of the above mentioned embodiment, the invention is supposed to get implemented into an end user terminal for watching interactive TV, hence a media stream is fed from the service provider using mechanisms common in broadcast (push) applications. Service selection is typically performed by selecting a specific channel for media streaming. If a specific service is detected, e.g. in a received DVB transport stream, an application is started on the terminal platform, which is able to run the media playback and to present the program description in the form of Electronic Program Guides (EPGs). This is exemplarily depicted in Fig. 3.

The end user can now select from that media stream the combination of elementary streams that, combined, create an own program or a different viewing perspective of the same live stream. Depending on the transmission method one transport stream may contain up to 8 different programs. Changing to other program groups requires to change to a different transport stream and is done by tuning the ingest channel of the receiver. Program information is updated with so called data or object carousels that transmit file systems, applications or program description on a regular basis in time multiplex with the regular media stream.

More advanced platforms can request personalized media streams using a broadband feedback channel. This method is employed for services such as VOD where each end terminal can select its own media stream, hence requiring a sophisticated media server. VOD content is provided on a webpage that just needs to get presented on the terminal.

The present innovation can at least partly be realized on an end user terminal that is capable of determining a degree of final rendering which it can manage and a media server that can support the end user terminal by generating specific perspectives depending on the workload the terminal is capable of due to the limited hardware resources or connected display or loudspeakers.

Doing so, a service that may feature DVR like functionality for the user at the server can be provided without the drawback of prolonged response time due to the latency caused my handling the communication, rendering a new perspective and passing that perspective to the end terminal.

Independent how the session for presenting the program was initiated, and independent of whether the content is delivered as live broadcast (push), or on demand or download (pull), the end user terminal is supposed to establish a connection to the server using a feedback channel. Optionally, the feedback channel offers broadband access. For instance, DVB employs such a link for improved channel switching by using RTCP (Real Time Control Protocol).

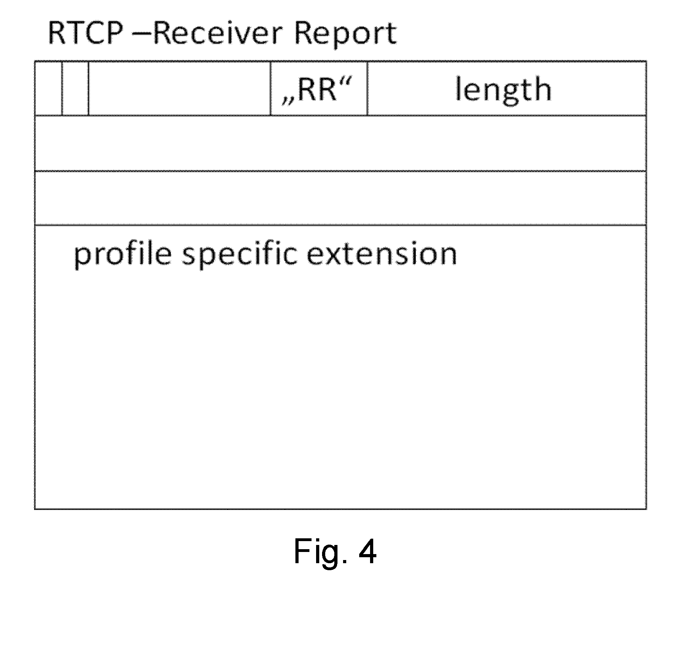

The RTCP protocol is intended to gather statistics of participants of a media distribution session. Hence the end user terminal can pass, with these packets, either workload information or support requests or both. An example is is depicted in fig. 4:
● RTCP packets are recurring regularly (e.g.: once per second).
● Within the receiver report of RTCP packets a profile is defined that provides information about workload (e.g. 80%, 50%), exceeding of one or more workload thresholds and/or support level (e.g. need, like). The profile type is defined in the profile specific extension of the RTCP RR packet. Examples types already defined are "Video Preference" or "Receiver Side Bandwidth Limits".

## Claims

1. Method for rendering at least one of audio, video and computer graphics content, said content being delivered by a serving device, said method comprising the steps of
- receiving, on an input-output device, a user request for the content,
- allocating, in response to said user request, a portion of at least one of processing and memorizing resources of said input-output device for rendering of the requested content wherein the allocated portion is chosen such that remaining resources of said input-output device are sufficient for maintaining at least the input-output device's capability to receive a subsequent user request and to react thereon with a predetermined response time,
- determining that an amount of resources required for rendering the requested content with a predetermined rendering quality and/or within a predetermined rendering time exceeds the allocated resources and determining a degree of pre-rendering required for meeting at least one of said predetermined rendering quality and said predetermined rendering time,
- pre-rendering the content on the serving device according to the determined degree of required pre-rendering and delivering the pre-rendered content from the serving device to the input-output device, and
- using the allocated resources for finalizing the rendering of the content on the input-output device.

2. Method of claim 1, wherein determination that the amount of resources required for rendering the requested content with said predetermined rendering quality and/or within said predetermined rendering time exceeds the allocated resources and determination of the degree of pre-rendering are performed on the serving device, said method further comprising delivering an indication of the allocated resources from the input-output device to the serving device.

3. Method of claim 1, wherein determination that the amount of resources required for rendering the requested content with said predetermined rendering quality and/or within said predetermined rendering time exceeds the allocated resources and determination of the degree of pre-rendering are performed on the input-output device, said method further comprising delivering an indication of the degree of required pre-rendering to the serving device.

4. Method of one of the preceding claims, wherein in case the amount of resources required for rendering the requested content with said predetermined rendering quality and within said predetermined rendering time does not exceed the allocated resources the serving device delivers the content un-rendered.

5. Method of claim 1, wherein said user request for content is a selection of a refined portion of further content, said method further comprising, prior to receiving said user request for content,
- receiving, at the input-output device, a user request for a service having a maintained quality of service, said quality of service guaranteeing displaying of rendered content of said predetermined quality within said predetermined rendering time,
- sending a subscribe request corresponding the requested service from the input-output device to the serving device,
- setting up the requested service at the serving device,
- receiving, at the input-output device, a further user request for the further content,
- sending the first content request from the input-output device to the serving device,
- providing the further content request from the serving device to the input-output device, and
- rendering and outputting the further content on the input-output device.

6. Input-output device for outputting at least one of rendered audio, rendered video and rendered computer graphics content, said content being delivered by a serving device, said input-output device comprising
- means for receiving a user request for the content,
- processing and memorizing resources,
- means for allocation of a portion of at least one of the processing and the memorizing resources wherein said means for allocation are adapted for choosing the allocated portion such that remaining resources of said input-output device are at least sufficient for maintaining the input-output device's capability to receive user inputs and react thereon with a predetermined response time,
- means for delivering an indication of the allocated resources to the serving device,
- means for receiving the content from the servicing device wherein the content is received pre-rendered in case an amount of resources required for rendering the requested content within a predetermined rendering time and/or with a predetermined rendering quality exceeds the allocated resources, and
- means for finalization of rendering of the received content.

7. Servicing device for delivering at least one of pre-rendered audio, pre-rendered video and pre-rendered computer graphics content to an input-output device for finalization of the pre-rendered content, said servicing device comprising
- means for receiving, from the input-output device, an indication of resources allocated in the input-output device for output,
- processing means adapted for determining an amount of resources required for rendering the requested content within a predetermined rendering time and/or with a predetermined rendering quality,
- said processing means being further adapted for using the allocated resources and the determined amount of required resources for determining a degree of required pre-rendering,
- means for pre-rendering the content according to the determined degree of required pre-rendering, and
- means for delivering the content to the input-output device wherein the content is delivered pre-rendered according to the determined degree of required pre-rendering in case the amount of resources required for rendering the requested content within said predetermined rendering time exceeds the allocated resources.

8. Servicing device according to claim 7, wherein the degree of required re-rendering is determined such that a predetermined quality of service is maintained, said quality of service guaranteeing displaying of rendered content with said predetermined quality and within said predetermined rendering time.
